# FASCICULE DE BREVET EUROPEEN

(11) **EP 3 181 644 B1**
(45) Date de publication et mention de la délivrance du brevet: **20.06.2018**
(21) Numéro de dépôt: 15307037.0
(22) Date de dépôt: 17.12.2015
(51) Int. Cl.: C09D 7/40, C08K 9/12, F01D 5/28, F16D 66/02, C09D 5/00, C09D 5/22

(54) **REVÊTEMENT DE CONTRÔLE DE L'INTÉGRITÉ INTERNE D'UNE STRUCTURE VÉHICULE LE COMPORTANT**
ÜBERZUG ZUR KONTROLLE DER INNEREN INTEGRITÄT EINER FAHRZEUGSTRUKTUR, DIE DIESEN ÜBERZUG UMFASST
COATING FOR MONITORING THE INTERNAL INTEGRITY OF A VEHICLE STRUCTURE COMPRISING SAME

(43) Date de publication de la demande: 21.06.2017
(73) Titulaire: AIRBUS (SAS), 31700 Blagnac (FR); Universidade de Aveiro, Aveiro 3810-193 (PT)
(72) Inventeur: SENANI, Sophie, 75014 PARIS (FR); BARUT, Sylvere, 31530 LASSERRE (FR); TEDIM, João, 3810-175 Aveiro (PT); FERREIRA, Mario, 1000-268 Lisboa (PT); ZHELUDKEVICH, Mikhail, 3810-405 Aveiro (PT); MAIA, Frederico, 3810-175 Aveiro (PT)
(74) Mandataire: Gicquel, Olivier Yves Gérard

(56) Documents cités:
- WO-A1-02/28973
- US-A- 3 965 350
- US-A1- 2010 187 439

## Description

### DOMAINE TECHNIQUE DE L'INVENTION

La présente invention vise un revêtement servant de dispositif de contrôle de l'intégrité interne d'une structure. Elle s'applique, notamment, à la détection de dommages internes dans une structure d'aéronef.

### ETAT DE LA TECHNIQUE

La tendance actuelle, dans le domaine de l'aéronautique, est au remplacement d'éléments de structure en métal par des matériaux plus légers tel que le plastique à renfort fibre de carbone (traduit de l'anglais « Carbon-Fiber Reinforced Polymer », abrégé CFRP). Le CFRP a l'inconvénient de présenter une tolérance aux dommages limitée. Un impact simple pouvant se produire au cours de l'assemblage ou d'une opération de maintenance peut causer des dommages internes importants et mettre l'intégrité de la structure à risque. La structure même du CFRP fait que, les dommages peuvent ne pas être visibles de l'extérieur, ce qui rend difficile la détection d'un tel dommage.

Dans des systèmes actuels, des revêtements de structure comportent des pigments, ou des capsules de teinture, positionnés dans l'épaisseur de ces revêtements. L'application d'une pression et/ou de l'énergie correspondante sur le revêtement provoque un éclatement des capsules libérant le colorant ou la diffusion des pigments dans la matrice, ce qui permet de détecter qu'un choc susceptible d'endommager la structure interne a eu lieu là où est visible la couleur des pigments ou des capsules.

Cependant, ces systèmes sont complexes à fabriquer, car des chocs pouvant survenir au cours de la fabrication ou du transport de ces formulations sont susceptibles de provoquer l'éclatement des capsules ou la diffusion des pigments.

De plus, ces systèmes ne permettent pas d'utiliser n'importe quel type de revêtement avec n'importe quel type de pigment pour des raisons de détection des couleurs.

Ces inconvénients proviennent du fait que seule la diffusion de couleur dans le revêtement indique qu'un impact a eu lieu.

### OBJET DE L'INVENTION

La présente invention vise à remédier à tout ou partie de ces inconvénients.

A cet effet, selon un premier aspect, la présente invention vise un revêtement servant de dispositif de contrôle de l'intégrité interne d'une structure, qui comporte :
- un matériau optiquement actif étant formé de nanoparticles luminescentes poreuses et
- une matrice du revêtement, associée au matériau optiquement actif, configurée pour être fissurée lorsque ladite matrice reçoit un impact au-delà d' pression prédéterminée, le matériau optiquement actif étant visible lors de la présence d'une telle fissure.

Ces dispositions ont pour effet de permettre d'identifier le positionnement d'un impact sur la structure susceptible d'avoir causé un dommage interne à la structure. En effet, le matériau optiquement actif devient visible dès lors que la matrice de revêtement a reçu un impact supérieur à une pression déterminée, cette pression correspondant à un impact susceptible d'endommager l'intérieur de la structure.

Ces dispositions ont pour avantage :
- de permettre la détection d'impacts susceptibles d'avoir causé un dommage interne à la structure y compris pour des opérateurs non-spécialistes et
- de permettre l'utilisation dans des conditions indépendantes des contraintes du matériau optiquement actif, ce dernier n'étant révélé que par la fissuration de la matrice.

Dans des modes de réalisation, lequel la matrice du revêtement et le matériau optiquement actif sont confondus.

Ces modes de réalisation permettent au dispositif de n'être formé que d'une couche positionnée sur la structure, ce qui permet notamment une fabrication simplifiée du dispositif par rapport à un même dispositif en deux couches.

Dans des modes de réalisation, le matériau optiquement actif représente entre 1% et 10% de la masse formée par la matrice et le matériau confondus.

Dans des modes de réalisation, la matrice du revêtement est appliquée sur une autre couche incorporant le matériau optiquement actif, appliquée directement sur la structure, la matrice étant fixée sur un côté opposé de cette couche par rapport à la structure.

Ces modes de réalisation permettent que la matrice de revêtement d'une part et la couche comportant le matériau optiquement actif d'autre part soient conçus de manière à remplir, chacun, une fonction attribuée : la fissuration à une pression prédéterminée pour le premier et la création d'un signal lumineux pour l'autre.

Dans des modes de réalisation, la matrice est opaque.

Ces modes de réalisation permettent de mettre en oeuvre un matériau optiquement actif continuellement, ce matériau étant révélé par le bris d'une partie de la matrice.

Ces modes de réalisation permettent aux nanoparticules d'émettre une fluorescence lorsque ces nanoparticules sont au contact de rayons ultraviolets, c'est-à-dire lorsque la matrice est fissurée et qu'une fissure est au contact des nanoparticules.

Dans des modes de réalisation, les nanoparticules sont dispersées dans une résine.

Ces modes de réalisation permettent aux nanoparticules d'appartenir à un corps rigide susceptible de fissuration conjointe avec la fissuration de la matrice. Cette résine forme la matrice lorsque la matrice et le matériau sont confondus.

Dans des modes de réalisation, le matériau optiquement actif est choisi pour réagir à l'exposition à des rayons ultraviolets, le matériau optiquement actif devenant visible lors d'une telle exposition.

Ces modes de réalisation permettent de ne révéler la présence de dommages qu'en présence d'équipement spécifique susceptible d'être manipulé par du personnel de maintenance.

Dans des modes de réalisation, le matériau optiquement actif est choisi pour réagir à l'exposition à un réactif chimique, le matériau optiquement actif devenant actif lors d'une telle exposition.

Ces modes de réalisation permettent de ne révéler la présence de dommages qu'en présence d'équipement spécifique susceptible d'être manipulé par du personnel de maintenance.

Dans des modes de réalisation, la matrice est formée d'au moins un précurseur hybride organique-inorganique d'organo-alkoxyde de métal pour former un réseau sol-gel.

Ces modes de réalisation permettent une meilleure maîtrise de la pression prédéterminée de fissuration de la matrice.

Dans des modes de réalisation, la matrice poreuse comporte des particules d'argiles, la pression nécessaire pour fissurer la matrice poreuse étant une fonction décroissante du nombre de particules d'argiles par unité de volume dans la matrice.

Ces modes de réalisation permettent de maîtriser la pression prédéterminée de fissuration de la matrice.

Dans des modes de réalisation, lequel la matrice poreuse est transparente pour au moins une longueur d'onde d'activité optique du matériau optiquement actif.

Ces modes de réalisation permettent d'améliorer la visibilité du matériau optiquement actif.

Selon un deuxième aspect, la présente invention vise un véhicule, dont une partie d'une structure de ce véhicule est recouverte du dispositif de contrôle de l'intégrité interne d'une structure objet de la présente invention.

Les buts, avantages et caractéristiques particulières du véhicule objet de la présente invention étant similaires à ceux du dispositif objet de la présente invention, ils ne sont pas rappelés ici.

### BREVE DESCRIPTION DES FIGURES

D'autres avantages, buts et caractéristiques particulières de l'invention ressortiront de la description non limitative qui suit d'au moins un mode de réalisation particulier du dispositif et du véhicule objets de la présente invention, en regard des dessins annexés, dans lesquels :
- la figure 1 représente, schématiquement et en coupe, un premier mode de réalisation particulier du dispositif objet de la présente invention,
- la figure 2 représente, schématiquement et en coupe, le premier mode de réalisation particulier du dispositif objet de la présente invention,
- la figure 3 représente, schématiquement et en coupe, un deuxième mode de réalisation particulier du dispositif objet de la présente invention,
- la figure 4 représente, schématiquement et en coupe, le deuxième mode de réalisation particulier du dispositif objet de la présente invention et
- la figure 5 représente, schématiquement et en perspective, un mode de réalisation particulier du véhicule objet de la présente invention.

### DESCRIPTION D'EXEMPLES DE REALISATION DE L'INVENTION

La présente description est donnée à titre non limitatif, chaque caractéristique d'un mode de réalisation pouvant être combinée à toute autre caractéristique de tout autre mode de réalisation de manière avantageuse. Par ailleurs, chaque paramètre d'un exemple de réalisation peut être mis en oeuvre indépendamment d'autres paramètres dudit exemple de réalisation.

On note dès à présent que les figures ne sont pas à l'échelle.

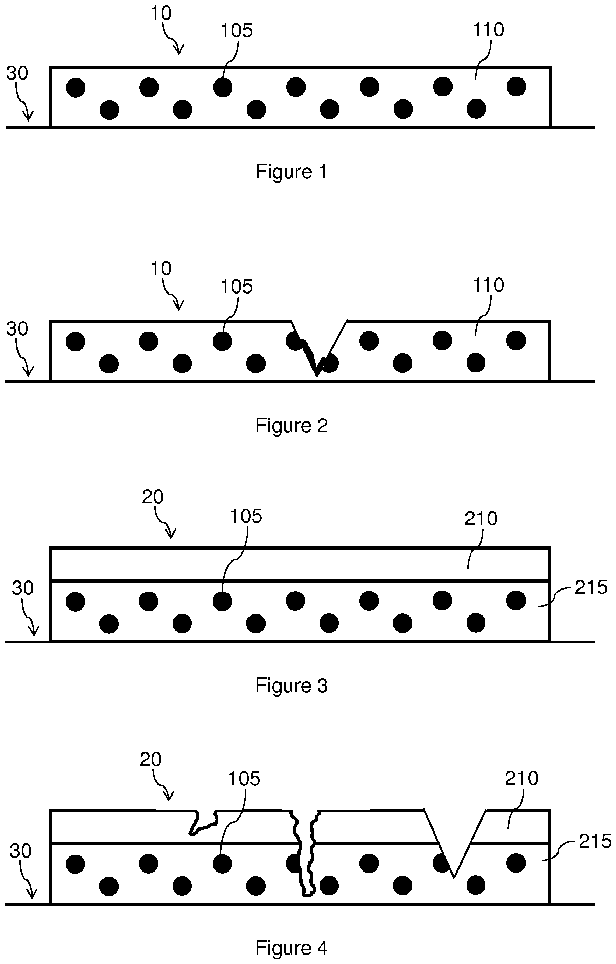

On observe, sur la figure 1, qui n'est pas à l'échelle, une vue schématique d'un mode de réalisation du dispositif 10 objet de la présente invention. Ce revêtement 10 de contrôle de l'intégrité interne d'une structure 30, comporte :
- un matériau 105 optiquement actif fixé contre la structure 30 et
- une matrice 110 de revêtement, associée au matériau 105 optiquement actif, configurée pour être fissurée lorsque ladite matrice 110 reçoit un impact à une pression prédéterminée, le matériau 105 optiquement actif étant visible lors de la présence d'une telle fissure.

La structure 30 est, par exemple, du CFRP utilisé en lieu de structures métalliques traditionnelles. Cette structure 30 est, par exemple, une structure :
- d'un aéronef,
- d'une embarcation maritime,
- d'un véhicule terrestre, ou
- d'une turbine.

De manière générale, la structure 30 peut être toute carrosserie externe d'un système mécanique ou toute structure formant un mécanisme pouvant être intégré à un système mécanique plus large.

Par exemple, le dispositif 10 objet de la présente invention peut être utilisé pour détecter un impact sur :
- un composant de navire, sur la coque ou le mat notamment, résultant du transport, du stationnement ou du déplacement de ce navire,
- un élément de moteur, de frein, de direction, d'embrayage, de système de freinage, d'un véhicule automobile,
- un vélo,
- un réservoir sous pression, par exemple de lanceur de fusées,
- l'intérieur ou l'extérieur d'un tel réservoir ou
- une lame ou un composant d'éolienne.

Le matériau 105 optiquement actif est, par exemple, un matériau nanostructuré. Ce matériau nanostructuré peut être organique ou inorganique. Ce matériau nanostructuré peut être inorganique et poreux. Ce matériau nanostructuré peut être formé de nanoparticules organiques, luminescentes et poreuses remplies de colorant organiques fluorescentes. Ce matériau 105 optiquement actif est choisi pour, par exemple, émettre des signaux lumineux (luminescence) sous l'excitation d'une source lumineuse ultra-violette extérieure de longueur d'onde comprise de 400 à 550 nanomètres, et de préférence 254 à 365 nanomètres. Préférentiellement, ce matériau 105 optiquement actif est choisi pour émettre des signaux lumineux sous l'excitation d'une lampe ultra-violette d'une longueur d'onde de 254 nanomètres. Ce matériau 205 optiquement actif est, par exemple, du SiNC-UMB («*Silica Nanocapsule contenant de l'Umbeliferone* »).

La matrice 110 de revêtement est formée, par exemple, d'au moins un précurseur hybride organique-inorganique d'organoalkoxyde de métal pour former un réseau sol-gel. Ce précurseur est, par exemple, de tétraéthoxysilane (abrégé « TEOS ») rendant la matrice 110 plus fragile et cassante. Alternativement, cette matrice 110 est formée de diméthylediéthoxysilane (abrégé DMDES) assouplissant la matrice 110. Alternativement, ce précurseur est formé de (3-Glycidyloxypropyl) trimethoxysilane (abrégé « GLYMO »), de Phenyltrimethoxysilane (abrégé « PTMS ») ou d'Hexadecyltrimethoxysilane (abrégé « HDTMS »).

Dans des variantes, des additifs sont ajoutés au précurseurxs, tel du dioxyde de titane ou des particules d'argile.

Le dioxyde de titane a pour effet de bloquer la fluorescence intrinsèque des nanoparticules chargées.

L'ajout d'argile augmente la fragilité de la matrice, ce qui permet de déterminer la pression à laquelle la matrice 110 se fissure en fonction de la part d'argile ajoutée dans la composition de la matrice 110. La pression nécessaire pour fissurer la matrice poreuse étant une fonction décroissante du nombre de particules d'argiles par unité de volume dans la matrice.

Préférentiellement, entre 1% et 10% de la masse de la matrice 110 est formée de particules d'argile. Préférentiellement, 5% de la masse de la matrice 110 est formée de particules d'argile.

Ainsi, comme on le comprend, le seuil de pression nécessaire à la réalisation de fissures dépend de la composition de la matrice, ce seuil étant déterminé pour correspondre à une pression minimale susceptible d'entraîner la formation de dégâts internes dans la structure 30.

On observe, en figure 2, le dispositif 10 après qu'un impact sur la matrice 110 a eu lieu, cet impact ayant entraîné la création d'une fissure dans la matrice 110. La fissure traverse le matériau 105 optiquement actif, de sorte que ce matériau est au contact de l'air libre. Selon les variantes, le matériau 105 se répand ou non dans la fissure ainsi formée.

Le matériau 105 devient ainsi détectable hors de la matrice 110, ce qui permet à un opérateur du dispositif 10 d'identifier le fait que la structure 30 a subit un impact susceptible d'avoir provoqué un dommage interne dans cette structure 30.

La détection du matériau 105 optiquement actif en contact avec l'air libre est réalisée visuellement :
- sans outil, quand le matériau 105 optiquement actif émet un signal lumineux présentant une longueur d'onde appartenant au spectre lumineux visible pour l'oeil humain,
- à l'aide d'un émetteur de rayons lumineux ultraviolets, le matériau 105 réagissant au contact de rayons lumineux ultraviolet, le matériau 105 devenant optiquement actif au contact de ces rayons ultraviolets pour produire un signal lumineux visible à l'oeil nu ou
- à l'aide d'un réactif chimique, sous forme d'aérosol par exemple, appliqué sur au moins une fissure, le matériau 105 réagissant au contact du réactif chimique, le matériau 105 devenant optiquement actif au contact de ce réactif pour produire un signal lumineux visible à l'oeil nu.

Dans des variantes, le matériau 105 optiquement actif émet un signal lumineux présentant une longueur d'onde détectée uniquement à l'aide d'un dispositif optique, configuré pour détecter cette longueur d'onde, porté par l'opérateur.

Une fois l'impact détecté, l'opérateur peut employer un dispositif d'inspection à ultrasons de la structure 30 afin de vérifier la présence d'un dégât interne à la structure 30.

Dans des modes de réalisation, tel que celui représenté en figure 1 et 2, la matrice 110 de revêtement et le matériau 105 optiquement actif sont confondus. La matrice 110 et le matériau 105 sont confondus en une couche unique déposée sur la structure 30.

Dans des modes de réalisation, tel que celui représenté en figure 1 et 2, le matériau 105 optiquement actif représente entre 1% et 10% de la masse formée par la matrice 110 et le matériau 105 confondus.

Préférentiellement, le matériau 105 optiquement actif représente entre 5% de cette masse.

Dans des modes de réalisation, tel que celui représenté en figure 3 et 4, la matrice 210 de revêtement est appliquée sur une couche 215 comportant le matériau 105 optiquement actif, appliqué sur la structure 30, la matrice 210 étant fixée sur un côté opposé de cette couche 215 par rapport à la structure 30.

Préférentiellement, le matériau 105 optiquement actif est réparti de manière homogène dans la couche 215.

La couche 215 présente, par exemple, une épaisseur comprise entre dix et cinquante micromètres. Préférentiellement, l'épaisseur de la couche 215 est comprise entre vingt et vingt-cinq micromètres.

La matrice 210 présente, par exemple, une épaisseur de cinq à vingt micromètres. Préférentiellement, l'épaisseur de la couche 210 est proche de dix micromètres.

Préférentiellement, entre 5% et 35% de la masse de la matrice 210 est formée de titane. Préférentiellement, 10% de la masse de la matrice 210 est formée de titane.

Dans des modes de réalisation, tel que celui représenté en figure 3 et 4, les nanoparticules sont dispersées dans une résine 215. Cette résine 215 est, par exemple, une résine de polyépoxyde, d'acrylique ou de polyuréthane.

Dans des modes de réalisation, tel que celui représenté en figure 3 et 4, la matrice 210 est opaque. Par « opaque », on entend non-transparent pour au moins une longueur d'onde du signal lumineux émis par le matériau 105 optiquement actif.

Dans des modes de réalisation, tel que celui représenté en figure 1 à 4, la matrice, 110 ou 210, poreuse est transparente pour au moins une longueur d'onde d'activité optique du matériau 105 optiquement actif.

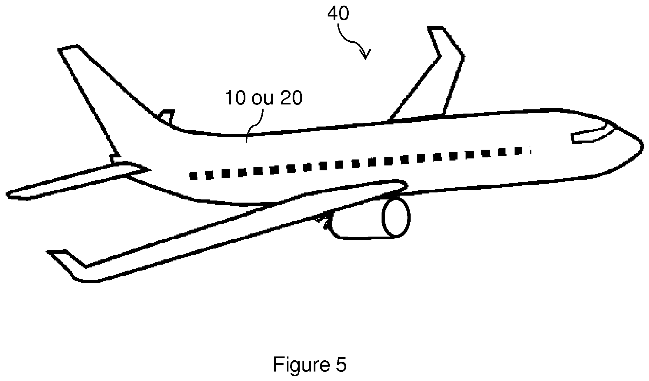

On observe, sur la figure 5, schématiquement, un mode de réalisation du véhicule 40 objet de la présente invention. Une partie d'une structure 30 de ce véhicule est recouverte du dispositif, 10 ou 20, de contrôle de l'intégrité interne d'une structure tel que décrit en regard de l'une des figures 1 à 4.

## Revendications

1. Revêtement (10, 20) servant de contrôle de l'intégrité interne d'une structure (30), **caractérisé en ce qu'**il comporte :
- un matériau (105) optiquement actif et
- une matrice (110, 210) du revêtement, associée au matériau optiquement actif, configurée pour être fissurée lorsque ladite matrice reçoit un impact au-delà d'une pression prédéterminée, le matériau optiquement actif étant visible lors de la présence d'une telle fissure,
et **en ce que** le matériau (105) optiquement actif est formé de nanoparticules luminescentes poreuses.

2. Revêtement (10) servant de contrôle selon la revendication 1, dans lequel la matrice (110) du revêtement et le matériau (105) optiquement actif sont confondus.

3. Revêtement (10) servant de contrôle selon la revendication 2, dans lequel le matériau (105) optiquement actif représente entre 1% et 10% de la masse formée par la matrice (110) et le matériau confondus.

4. Revêtement (20) de contrôle selon l'une des revendications 1 à 3, dans lequel la matrice (210) est opaque.

5. Revêtement (20) de contrôle selon la revendication 1, dans lequel les nanoparticules sont dispersées dans une résine (215).

6. Revêtement (10, 20) de contrôle selon l'une des revendications 1 à 5, dans lequel le matériau (105) optiquement actif est choisi pour réagir à l'exposition à des rayons ultraviolets, le matériau optiquement actif devenant visible lors d'une telle exposition.

7. Revêtement (10, 20) de contrôle selon l'une des revendications 1 à 5, dans lequel le matériau (105) optiquement actif est choisi pour réagir à l'exposition à un réactif chimique, le matériau optiquement actif devenant actif lors d'une telle exposition.

8. Revêtement (10, 20) de contrôle selon l'une des revendications 1 à 7, dans lequel la matrice (110, 210) est formée d'au moins un précurseur hybride organique-inorganique d'organo-alkoxyde de métal pour former un réseau sol-gel.

9. Revêtement (10, 20) de contrôle selon la revendication 8, dans lequel la matrice (110, 210) poreuse comporte des particules d'argiles, la pression nécessaire pour fissurer la matrice poreuse étant une fonction décroissante du nombre de particules d'argiles par unité de volume dans la matrice.

10. Revêtement (10, 20) de contrôle selon l'une des revendications 1 à 9, dans lequel la matrice (110, 210) poreuse est transparente pour au moins une longueur d'onde d'activité optique du matériau (105, 205) optiquement actif.

11. Véhicule (40), **caractérisé en ce qu'**une partie d'une structure (30) de ce véhicule est recouverte du dispositif (10, 20) de contrôle de l'intégrité interne d'une structure selon l'une des revendications 1 à 10.

## Patentansprüche

1. Überzug (10, 20), welcher zur Kontrolle der inneren Integrität einer Struktur (30) dient, **dadurch gekennzeichnet, dass** er umfasst:
- ein optisch aktives Material (105) und
- eine Matrix (110, 210) des Überzugs, die dem optisch aktiven Material zugeordnet ist und dafür ausgebildet ist, rissig zu werden, wenn die Matrix einen Stoß empfängt, der einen vorbestimmten Druck überschreitet, wobei das optisch aktive Material beim Vorhandensein eines solchen Risses sichtbar ist,
und dadurch, dass das optisch aktive Material (105) von lumineszierenden porösen Nanopartikeln gebildet wird.

2. Zur Kontrolle dienender Überzug (10) nach Anspruch 1, wobei die Matrix (110) des Überzugs und das optisch aktive Material (105) miteinander vermischt sind.

3. Zur Kontrolle dienender Überzug (10) nach Anspruch 2, wobei auf das optisch aktive Material (105) zwischen 1 % und 10 % der Masse entfallen, die von der Matrix (110) und dem Material, die miteinander vermischt sind, gebildet wird.

4. Kontrollüberzug (20) nach einem der Ansprüche 1 bis 3, wobei die Matrix (210) undurchsichtig ist.

5. Kontrollüberzug (20) nach Anspruch 1, wobei die Nanopartikel in einem Harz (215) dispergiert sind.

6. Kontrollüberzug (10, 20) nach einem der Ansprüche 1 bis 5, wobei das optisch aktive Material (105) so gewählt ist, dass es auf die Exposition gegenüber ultravioletten Strahlen reagiert, wobei das optisch aktive Material bei einer solchen Exposition sichtbar wird.

7. Kontrollüberzug (10, 20) nach einem der Ansprüche 1 bis 5, wobei das optisch aktive Material (105) so gewählt ist, dass es auf die Exposition gegenüber einem chemischen Reagens reagiert, wobei das optisch aktive Material bei einer solchen Exposition sichtbar wird.

8. Kontrollüberzug (10, 20) nach einem der Ansprüche 1 bis 7, wobei die Matrix (110, 210) von wenigstens einem hybriden organisch-anorganischen Präkursor eines Organoalkoxids eines Metalls gebildet wird, um ein Sol-Gel-Netzwerk zu bilden.

9. Kontrollüberzug (10, 20) nach Anspruch 8, wobei die poröse Matrix (110, 210) Tonteilchen umfasst, wobei der erforderliche Druck für eine Rissbildung in der Matrix eine fallende Funktion der Anzahl der Tonteilchen pro Volumeneinheit in der Matrix ist.

10. Kontrollüberzug (10, 20) nach einem der Ansprüche 1 bis 9, wobei die poröse Matrix (110, 210) für wenigstens eine Wellenlänge der optischen Aktivität des optisch aktiven Materials (105, 205) durchlässig ist.

11. Fahrzeug (40), **dadurch gekennzeichnet, dass** ein Teil einer Struktur (30) dieses Fahrzeugs mit der Vorrichtung (10, 20) zur Kontrolle der inneren Integrität einer Struktur nach einem der Ansprüche 1 bis 10 bedeckt ist.

## Claims

1. Coating (10, 20) serving for inspection of the internal integrity of a structure (30), **characterized in that** it includes:
- an optically active material (105); and
- a matrix (110, 210) of the coating, which matrix is associated with the optically active material and configured to crack when said matrix receives an impact beyond a preset pressure, the optically active material being visible when such a crack is present,
and **in that** the optically active material (105) is formed from porous luminescent nanoparticles.

2. Coating (10) serving for inspection according to Claim 1, wherein the matrix (110) of the coating and the optically active material (105) are commingled.

3. Coating (10) serving for inspection according to Claim 2, wherein the optically active material (105) represents between 1% and 10% of the weight of the commingled matrix (110) and material.

4. Inspection coating (20) according to one of Claims 1 to 3, wherein the matrix (210) is opaque.

5. Inspection coating (20) according to Claim 1, wherein the nanoparticles are dispersed in a resin (215) .

6. Inspection coating (10, 20) according to one of Claims 1 to 5, wherein the optically active material (105) is chosen to react to the exposure to ultraviolet rays, the optically active material becoming visible during such an exposure.

7. Inspection coating (10, 20) according to one of Claims 1 to 5, wherein the optically active material (105) is chosen to react to the exposure to a chemical reaction, the optically active material becoming active during such an exposure.

8. Inspection coating (10, 20) according to one of Claims 1 to 7, wherein the matrix (110, 210) is formed from at least one hybrid organic-inorganic, metal organo-alkoxide precursor to form a sol-gel network.

9. Inspection coating (10, 20) according to Claim 8, wherein the porous matrix (110, 210) includes clay particles, the pressure required to crack the porous matrix being a decreasing function of the number of clay particles per unit volume in the matrix.

10. Inspection coating (10, 20) according to one of Claims 1 to 9, wherein the porous matrix (110, 210) is transparent at at least one wavelength of optical activity of the optically active material (105, 205).

11. Vehicle (40), wherein some of a structure (30) of this vehicle is covered with the device (10, 20) for inspecting the internal integrity of a structure according to one of Claims 1 to 10.
